# EUROPÄISCHE PATENTANMELDUNG

(11) **EP 0 523 308 A1**
(43) Veröffentlichungstag der Anmeldung: **20.01.1993**
(21) Anmeldenummer: 91810585.9
(22) Anmeldetag: 19.07.1991
(51) Int. Cl.: G01N 21/47, G01N 21/59, G01J 3/50

(54) **Fotometrisches Verfahren und computergesteuertes Fotometer**

(71) Anmelder: GRETAG Aktiengesellschaft, CH-8105 Regensdorf (CH)
(72) Erfinder: Berner, Markus, CH-8155 Niederhasli (CH)
(74) Vertreter: Kleewein, Walter, Dr.

(57) **Zusammenfassung**

Ein rechnergesteuertes Spektralfotometer (SPM) ist mit einer seriellen Schnittstelle (SIF) versehen, an die ein Balken-Code-Leser (BCR) anschliessbar ist. Mittels des Balken-Code-Lesers können Kalibrations- und Konfigurationsdaten oder Funktionsbefehle für das Spektralfotometer von einem Datenträger abgelesen und an den Rechner (2) im Spektralfotometer übertragen werden.

## Beschreibung

Die Erfindung betrifft ein fotometrisches Verfahren gemäss dem Oberbegriff von Patentanspruch 1 und ein entsprechen des computergesteuertes Fotometer gemäss dem Oberbegriff von Patentanspruch 11.

Ein computergesteuertes Fotometer der hier zur Rede stehenden Art ist beispielsweise das in der grafischen Industrie weltweit eingesetzte portable Spektralfotometer SPM 100 der Firma GRETAG AG, Regensdorf, Schweiz. Dieses Spektralfotometer unterstützt eine Vielzahl von Messmodi (Farbdichten, Spektren, Farbmetrik etc.), erlaubt Messungen unter verschiedenen Bedingungen (Standards für Farbdichten, Lichtarten, Beobachterwinkel für Farbmetrik etc.) durchzuführen und erlaubt auch, diese Bedingungen (z.B. Lichtarten) frei zu programmieren. Es verfügt ferner auch über die Fähigkeit, mehrere Referenzwerte und Kalibrationswerte einzustellen beziehungsweise zu speichern.

Die Bedienung des Geräts, dass heisst die Wahl der verschiedenen Messmodi und Messbedingungen sowie die Einstellung beziehungsweise Speicherung der diversen Referenz-und Kalibrierwerte etc., erfolgt normalerweise manuell über die Bedienungstastatur des Geräts. Zusätzlich ist auch noch eine serielle Schnittstelle zum Anschluss eines externen Computers vorgesehen, über welchen das Gerät durch Uebertragung entsprechender Steuerdaten alternativ zur Tastatur gesteuert werden kann.

Da es sich beim genannten Fotometer um ein portables, relativ kleines Handgerät handelt, sind die Speicher- und Bedienungsmöglichkeiten naturgemäss gewissen Beschränkungen unterworfen, welche insbesondere komplexere Eingaben über die Tastatur oftmals als umständlich erscheinen lassen.

Durch die Erfindung soll nun diese Schwierigkeit überwunden und die Bedienungsfreundlichkeit eines solchen Fotometers verbessert werden, wobei gleichzeitig auch die Grundlage für eine erweiterte Anwendungs- beziehungsweise Funktionsvielfalt des Geräts geschaffen werden soll.

Diese Aufgabe wird durch das in den unabhängigen Ansprüchen beschriebene erfindungsgemässe fotometrische Verfahren und das erfindungsgemässe Fotometer gelöst Bevorzugte Ausführungsvarianten und besonders vorteilhafte Ausgestaltungen des Verfahrens und des Fotometers sind Gegenstand der abhängigen Ansprüche.

Die grundlegende Idee der Erfindung besteht darin, die relativ umständlich von Hand über die Tastatur einzugebenden Einstellungen oder speicherplatzintensive Daten wie Messkonfigurationen, Messmodi, Messbedingungen, Referenzwerte, Kalibrationswerte und dergleichen in einem externen Speicher abzulegen und von dort bei Bedarf in das Gerät zu laden. Die externe Speicherung kann an sich in beliebiger Weise erfolgen (z.B. auch in einem ROM oder einem EPROM oder dergleichen), ganz besonders zweckmässig ist jedoch die Speicherung auf einem Datenträger in maschinenlesbarer Form, insbesondere in Form eines optische lesbaren Balkencodes. Die sogespeicherten Steuerdaten können dann einerseits sehr einfach mittels eines unaufwendigen, handelsüblichen Lesegeräts, insbesondere eines Balken-Code-Lesers (''Wand'') abgelesen und in das Fotometer geladen werden, und können andererseits auch sehr einfach und billig aufgezeichnet und transportiert werden. Wenn gemäss einer vorteilhaften Ausgestaltung der Erfindung ein grafikfähiger Drucker an das Fotometer angeschlossen und sein interner Rechner entsprechend programmiert ist, so können die aktuellen Steuerdaten und auch Messdaten etc. als Balken-Codes oder dergleichen ausgedrückt und somit auf Papier gespeichert werden. Später können dann diese Daten mit dem Lesegerät wieder eingelesen werden, und somit die alten Konfigurationen etc. bequem wieder eingestellt werden.

Das erfindungsgemässe Konzept erlaubt komplexe Operationen, die mit der Tastatur am Gerät oft nur mühsam bedient werden können, sehr bequem auszuführen. Es gestaltet ferner, neuartige Messbedingungen (z.B. Lichtarten) sehr einfach per Post oder per Telefax dem Anwender zukommen zu lassen. Ebenso können neue Programmversionen auf diese Weise dem Anwender zugestellt werden. Messmodi, Messbedingungen etc. können als Balken-Code oder dergleichen in die Bedienungsanleitung für das Gerät integriert werden, sodass sie der Anwender einfach auswählen und in das Gerät laden kann.

Die Anwendungsmöglichkeiten für das erfindungsgemässe Konzept sind zahlreich. Es können Gerätekonfigurationen (z.B. aus der Bedienungsanleitung),Tabellen (z.B. Lichtarten), Referenzwerte, Kalibrationswerte (z.B. Messwerte auf einem Eichstandard) und Tastensequenzen (Makros) eingelesen oder ausgedruckt werden. Dies führt zu Bedienungserleichterungen bei komplexen Funktionen, Eingaben von Text und Zahlen oder bei speziellen Service-Funktionen. Ferner können neue Programmversionen oder Programmerweiterungen auf diese Weise einfach in das Gerät geladen werden. Schliesslich ist es auch möglich, den gesamten Speicherinhalt des Geräts zu sichern.

Weitere Vorteile und Details der Erfindung ergeben sich aus der nachstehenden Beschreibung in Verbindung mit der Zeichnung. Es zeigen:
- Fig. 1: eine vereinfachte Ansicht eines erfindungsgemässen Spektralfotometers,
- Fig. 2: ein Blockschaltschema des Spektralfotometers der Fig. 1,
- Fig. 3: ein Flussdiagramm eines erfindungswesentlichen Funktionsablaufausschnitts und
- Fig. 4-8: Beispiele für verschiedene Anweisungen an das Spektralfotometer in Form von Balken-Codes.

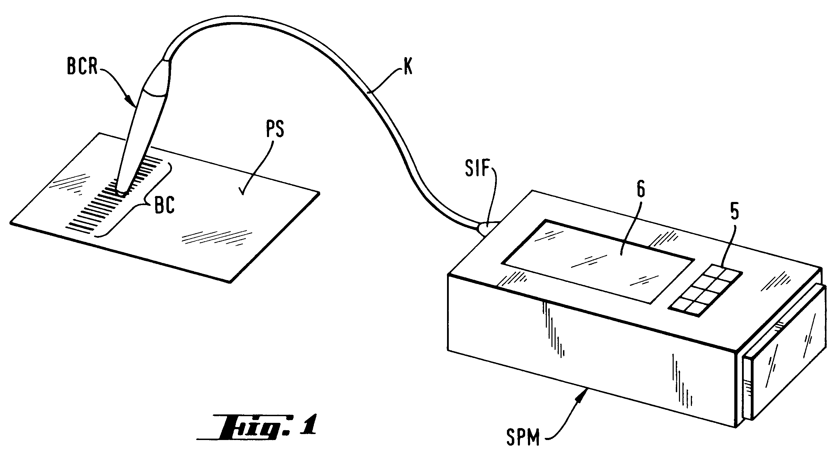

Fig. 1 zeigt den grundsätzlichen Aufbau eines erfindungsgemässen Spektralfotometers. Dieses umfasst das eigentliche Spektralfotometer SPM, welches mit einer seriellen Schnittstelle ausgestattet ist, und einen handelsüblichen Balken-Code-Leser (''Wand'') BCR, der über ein Kabel K an den Schnittstellenstecker SIF angeschlossen ist und zum Abtasten von auf einem Datenträger in Form eines Blatts Papier PS vorhandenen, in Form eines Balken-Codes aufgedruckten Daten BC ausgebildet ist.

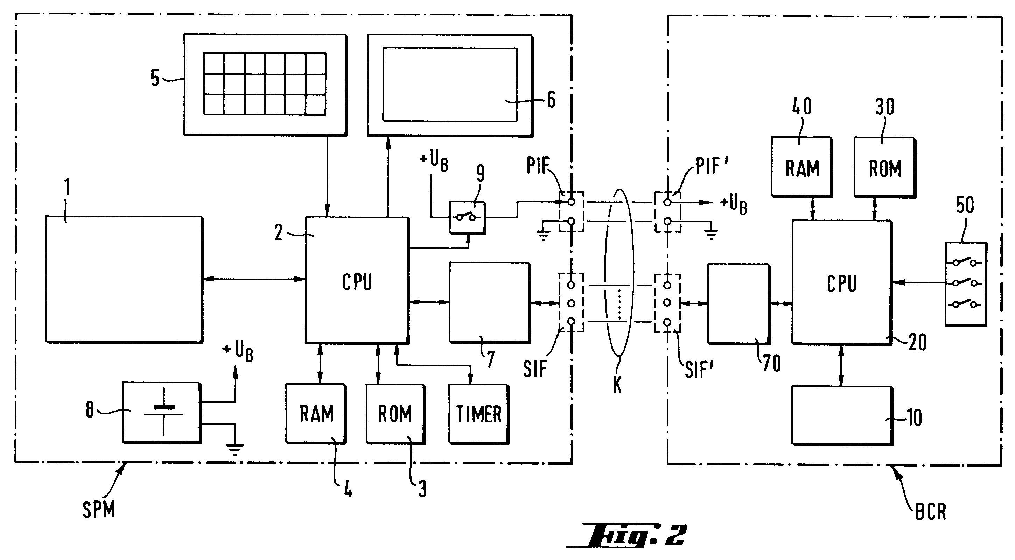

Beim Spektralfotometer SPM handelt es sich um ein handelsübliches computergesteuertes Gerät, beispielsweise etwa das eingangs angeführte Handmessgerät SPM 100 der Firma GRETAG AG. Der mechanisch-optische Aufbau dieses Geräts ist beispielsweise in den US-PS Nos. 4,968,140, 4,961,646 und 4,929,084 detailliert beschrieben. Der prinzipielle elektrische Aufbau ergibt sich aus dem in Fig. 2 dargestellten Blockschaltschema.

Das Gerät SPM umfasst einen fotoelektrischen Messwandler 1, der das eigentliche Messsystem bildet und das vom Messobjekt stammende Messlicht in digitale Messdaten umwandelt. Es umfasst ferner einen Rechner 2 mit einem Festwertspeicher 3 und einem Arbeitsspeicher 4, welcher den Messwandler 1 steuert und die Messdaten in Messergebnisse verarbeitet Der Rechner 1 ist mit einer Bedienungstastatur 5, einer optischen Anzeigevorrichtung 6 für die Messergebnisse und Meldungen des Rechners und der schon genannten seriellen Schnittstelle 7 verbunden. Eine Batterie 8 versorgt das Gerät mit der nötigen elektrischen Energie. Die serielle Schnittstelle 7 führt zum Schnittstellenstecker SIF. Eine weitere Steckverbindung PIF führt über einen in noch zu beschreibender Weise vom Rechner 2 gesteuerten Schalter 9 die geschaltete Speisespannung, z.B. +5V.

Der Balken-Code-Leser ("Wand'') BCR ist konventionell aufgebaut und umfasst ein Laser-basiert es Lesesystem 10, einen Rechner 20, einen Festwertspeicher 30, einen Arbeitsspeicher 40, eine serielle Schnittstelle 70 und einige Schalter 50 zur Einstellung beziehungsweise Programmierung der diversen Funktionsmöglichkeiten. Ferner ist er mit einem Schnittstellenstecker SIF' und einem Speisespannungsstecker PIF' versehen, über welchen ihm die Betriebsspannung vom Spektralfotometer SPM zugeführt wird. Die Steckverbindungen PIF und PIF' sowie SIF und SIF' sind im Betrieb durch das Kabel K miteinander verbunden.

Als Balken-Code-Leser BCR kann beispielsweise der Typ HBCR-8200 der Firma Hewlett-Packard, USA eingesetzt werden. Der Aufbau und die Betriebsweise dieses Geräts gehen aus dem zugehörigen Manual hervor und bedürfen daher an dieser Stelle keiner weiteren Erläuterung.

Das Spektralfotometer SPM ist beispielsweise das schon genannte Gerät SPM 100 der Firma GRETAG AG. Es ist im Aufbau mit diesem identisch und unterscheidet sich von diesem lediglich durch die noch näher zu beschreibende Programmierung. Ein weiteres computergesteuertes Farbmessgerät vergleichbarer Art, das mit einer seriellen Schnittstelle zur Steuerung über einen externen Host-Computer ausgestattet ist, ist beispielsweise in der US-PS 4,591,978 beschrieben. Eine nähere Erläuterung des elektrischen Aufbaus der erfindungsgemässen Spektralfotometers SPM erübrigt sich daher ebenfalls.

Die Bedienung des Spektralfotometers SPM erfolgt über seine Tastatur 5. Ueber diese Tastatur kann das Gerät ein- und ausgeschaltet werden, können seine verschiedenen Messfunktionen (Messmodi) angewählt und Messkonfigurationen eingestellt werden und können Daten wie z.B. Referenzwerte, Kalibrationswerte etc. eingegeben werden. Alle diese Eingabe- beziehungsweise Einstell- oder Bedienungsmöglichkeiten sind auch über einen an die serielle Schnittstelle SIF anschliessbaren externen Host-Rechner vorhanden. Die dafür notwendige Software ist im Festwertspeicher 30 enthalten. Die Software selbst entspricht soweit genau derjenigen des bekannten Geräts SPM 100 der Firma GRETAG AG und bedarf daher keiner näheren Erläuterung. Ausserdem ist sie für das Verständnis der vorliegenden Erfindung ohne Bedeutung.

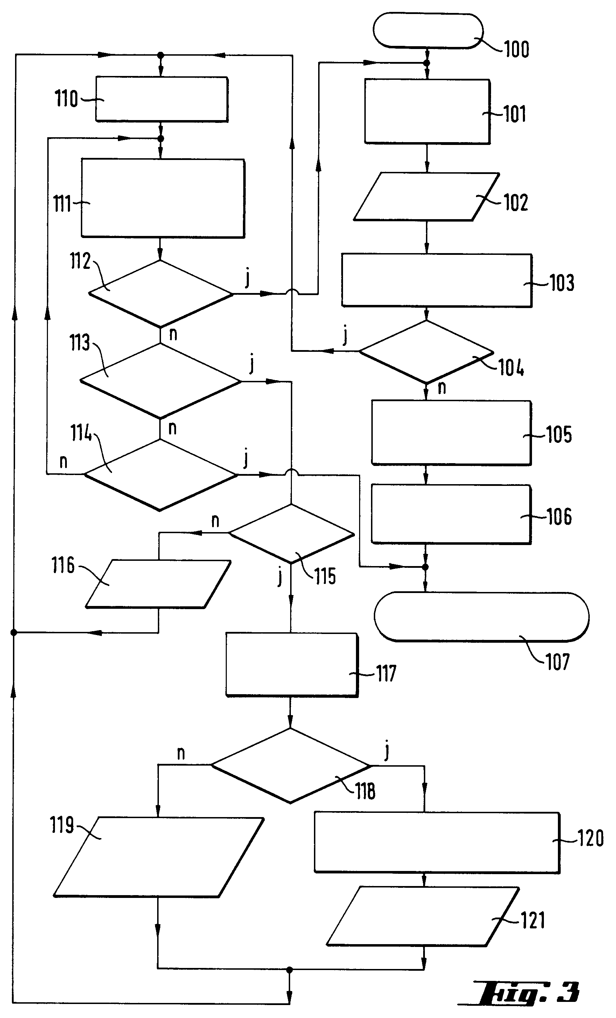

Wie schon erwähnt, erfordert die manuelle Bedienung des Spektralfotometers SPM über seine beschränkte Tastatur in gewissen Fällen komplexere Tastenbetätigungsfolgen, insbesondere wenn grössere Datenmengen, z.B. beider Neuprogrammierung von speziellen Lichtartdaten, eingegeben werden sollen. Um die Bedienung zu erleichtern und zu vereinfachen wird nun die Bedienung des Geräts gemäss einem Grundgedanken der Erfindung um eine weitere Möglichkeit erweitert, indem der Rechner 2 so programmiert ist, dass erals Bedienungselement nicht nur von der Bedienungstastatur 5 oder von einem an die serielle Schnittstelle SIF angeschlossenen externen Host-Rechner, sondern zusätzlich auch noch von einem an die Schnittstelle SIF angeschlossenen Lesegerät, hier in Form des Balken-Code-Lesers BCR angesprochen werden kann. Der Rechner 2 erkennt, ob das Lesegerät an die Schnittstelle angeschlossen ist, und empfangt und interpretiert die ihm von diesem Lesegerät zugeführten Steuerdaten und führt die den Steuerdaten entsprechenden Operationen aus, als ob erentsprechende Anweisungen vom Host-Computer oder von der Bedienungstastatur empfangen hätte. Die dafür notwendigen, gegenüber den bekannten Geräten, z.B. dem SPM 100 der Firma GRETAG AG, zusätzlichen Funktionsabläufe gehen aus dem Fluss-Schemader Fig. 3 hervor.

Im dargestellten, bevorzugten Ausführungsbeispiel sind die die entsprechenden Tastendruckoperationen ersetzenden Steuerdaten für den Rechner 2 als Balken-Code auf Papier oder der gleichen vorhanden, und entsprechend ist das Lesegerät ein Balken-Code-Leser. Die Erfindung ist jedoch nicht darauf beschränkt. Die Steuerdaten könnten auch in beliebiger anderer maschinenlesbarer Formauf einem beliebigen anderen Datenträger aufgezeichnet sein, wobei dann eben das Lesegerät entsprechend angepasst sein müsste. Beispielsweise könnte als Datenträger ein Magnetband oder eine in der Computer-Technik übliche Diskette Verwendung finden, wobei dann das Lesegerät ein Magnetbandleser oder eine Disketten-Lesestation wäre. Wesentlich ist lediglich, dass das Lesegerät die aufgezeichneten Steuerdaten in digitaler Form nach einem festgelegten Protokoll über die Schnittstelle an den Rechner 2 des Spektralfotometers übertragen kann.

Das erfindungsgemässe Spektralfotometer SPM ist genau wie das bekannte Gerät SPM 100 der Firm a GRETAG AG mit einer Stromsparautomatik ausgestattet, um den eingebauten Akkumulator zu schonen. Im Normalfall sind der Rechner 2 und die anderen grösseren Stromverbraucher abgeschaltet beziehungsweise im Stand-By-Modus. Bei Betätigung einer Taste wird der Rechner 2 kurz, z.B. für ca. 2 Sekunden, aktiviert und führt die gewünschte Operation aus und zeigt das Resultat auf der Anzeigevorrichtung 6 an. Dann wird er wieder abgestellt, die Anzeige erst nach einer gewissen Verzögerung. Bei abgeschaltetem Rechner 2 ist aber über den von diesem angesteuerten Schalter 9 auch der Speisespannungsanschluss PIF deaktiviert und der Balken-Code-Leser BCR damit nicht mit Spannung versorgt. Beim erfindungsgemässen Betrieb mit Balken-Code-Leser ist daher ein anderer Funktionsablauf erforderlich, der im folgenden anhand des Flussschemas in Fig. 3 erläutert wird.

Ausgehend vom Bereitschafts- oder Stand-BY-Zustand wird der Rchner und damit die Speisespannungsverbindung PIF durch Betätigung einer beliebigen Taste der Bedienungstastatur 5 aktiviert (Kasten 100), dann die der Taste entsprechende Aktion ausgelöst (Kasten 101) und das Resultat auf der Anzeigevorrichtung 6 angezeigt (Kasten 102). Nun testet der Rechner 2, ob der Balken-Code-Leser BCR (oder ein anderes entsprechendes Lesegerät) an die Schnittstellenverbindung SIF angeschlossen ist (Kasten 103 und 104). Dies kann z.B. in herkömmlicher Weise durch Aussenden einer festgelegten Meldung an den Balken-Code-Leser erfolgen, auf welche dieser mit einer festgelegten Antwort reagiert. Empfängt der Rechner diese Antwort, ist das Lesegerät angeschlossen, andernfalls nicht. Wenn kein Balken-Code-Leser BCR angeschlossen ist, wird der Rechner 2 ausgeschaltet (Kasten 105), dann z.B. 30 Sekunden gewartet (Kasten 106) und schliesslich auch noch die Anzeigevorrichtung 6 ausgeschaltet (Kasten 107), wobei sich das Gerät dann wieder im anfänglichen Bereitschaftszustand befindet. Mit Ausnahme des Tests auf angeschlossenen Balken-Code-Leser (Kasten 103 und 104) ist soweit der Funktionsablauf wie beim bekannten Spektralfotometer SPM 100 der Firma GRETAG AG.

Wenn der Rechner 2 einen angeschlossenen Balken-Code-Leser BCR erkennt (Kasten 104), wird zunächstein Zeitfenster von z.B. 30 Sekunden geöffnet, während welchem der Rechner 2 und der Speisespannungsanschluss PIF auf jeden Fall aktiviert bleiben (Kasten 110). Nun erfolgt laufend eine Ueberprüfung (Kasten 111), ob eine Taste der Bedienungstastatur 6 gedrückt wurde (Kasten 112) oder ob Steuerdaten vom Balken-Code-Leser BCR empfangen wurden (Kasten 113). Trifft keiner der beiden Fälle zu, wird getestet (Kasten 114), ob das Zeitfenster wieder geschlossen, das heisst die Verzögerungszeit abgelaufen ist. Ist letzteres der Fall, werden der Rechner 2 und die Anzeigevorrichtung 6 abgeschaltet (Kasten 107). Danach befindet sich das Gerät wieder im Bereitschaftszustand.

Wenn während des geöffneten Zeitfensters eine Taste gedrückt wurde, verzweigt das Programm zum Kasten 101, führt die der Taste entsprechende Aktion aus, zeigt das Resultat an (Kasten 102) und führt wie der den Test auf angeschlossenen Balken-Code-Leser BCR durch (Kasten 103 und 104). Falls der Leser BCR angeschlossen ist, wird wieder zum Kasten 110 gesprungen und das Zeitfenster neu geöffnet.

Wurden während des geöffneten Zeitfensters Steuerdaten vom Balken-Code-Leser BCR empfangen (Kasten 113), so werden diese auf Fehlerfreiheit überprüft (Kasten 115). Dies kann z.B. auf herkömmliche Weise anhandeines vom Balken-Code-Leser BCR standardmässig mitübertragenen Fehlererkennungscodes erfolgen. Wurde ein Lesefehler oder ein Ubertragungsfehler erkannt (Kasten 115), so erfolgt die Ausgabe einer geeigneten Fehlermeldung an die Anzeigevorrichtung 6 (Kasten 116), und die Programmschlaufe wird mit dem Neusetzen des Zeitfensters (Kasten 110) wiederholt. Bei fehlerfreien Steuerdaten werden diese im Arbeitsspeicher 4 abgespeichert (Kasten 117) und daraufhin auf ihre Vollständigkeit überprüft (Kasten 118). Sind die Steuerdaten noch nicht vollständig, wird eine Aufforderung zum Einlesen der fehlenden Teile der Steuerdaten an die Anzeigevorrichtung 6 ausgegeben (Kasten 119), und dann die Programmschlaufe ebenfalls wieder mit dem Neusetzen des Zeitfensters (Kasten 110) wiederholt. Sind die Steuerdaten vollständig, wird die ihrer Bedeutung entsprechende Aktion ausgeführt (Kasten 120) und eine OK-Meldung an die Anzeigevorrichtung 6 ausgegeben (Kasten 121). Die Ausführung der durch die Steuerdaten definierten Aktion erfolgt analog der Ausführung von über einen exernen Host-Rechner zugeführten Steuerdaten und bedarf deshalb keiner näheren Erläuterung. Nach der O.K.-Meldung wird die Programmschlaufe wiederum beginnend mit dem Neu-Oeffnen des Zeitfensters (Kasten 110) wiederholt und so weiter. Wenn keine Steuerdaten vom Balken-Code-Leder BCR empfangen werden oder keine Taste gedrückt wird, schliesst sich das Zeitfenster nach Zeitablauf (Kasten 114) und das Gerät ist wieder in den Bereitschafts-Zustand versetzt (Kasten 107).

Als Balken-Code kann ein genormter Standard-Code zum Einsatzkommen, wie er z.B. im Manual zum Balken-Code-Leser HBCR-8200 von Hewlett-Packard beschrieben ist. Dabei enthält jeder Code-Streifen definierte Start-Zeichen, die Information, eine Checksumme und definierte Stop-Zeichen. Mittels der Checksumme kann der Balken-Code-Leser selbsttätig erkennen, ober den Code-Streifen korrekt gelesen hat, und eine entsprechende Meldung an den Rechner schicken. Diese Funktionen sind in handelsüblichen Balken-Code-Lesern ("Wands") standardmässig implementiert.

Dadie Länge der Code-Streifen normgemäss limitiert ist (die Information kann z.B. maximal 31 Zeichen umfassen) und die an den Rechner zu übertragenden Steuerdaten häufig einen längeren Datensatz umfassen, müssen diese Datensätze in mehrere Teildatensätze unterteilt werden. Jeder Teildatensatz enthält dabei eine Information über die Anzahl der zum vollständigen Datensatz gehörenden Teildatensätze, über seine Position innerhalb des vollständigen Datensatzes (Positionsnummer) und schliesslich den eigentlichen Meldungsteil, das heisst einen Teil der eigentlichen Steuerdaten. Die Gesamtheit der Meldungsteile ergibt dann wieder die vollständigen Steuerdaten. Falls die Steuerdaten nur einen einzigen Teildatensatz umfassen, kann natürlich auch die Information über Anzahl und Positionsnummer der Teildatensätze entfallen.

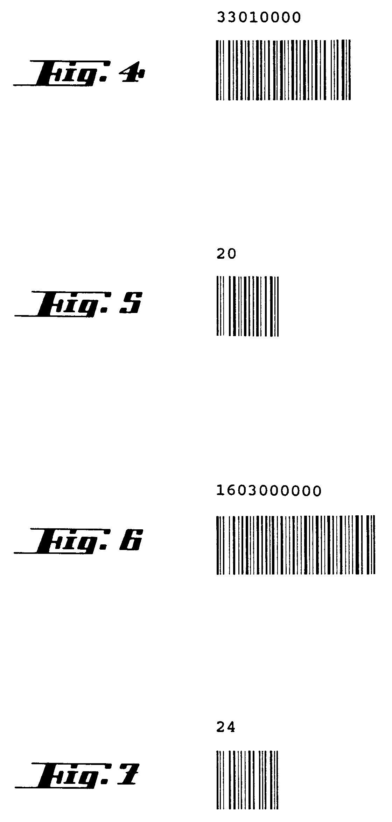

Die Figuren 4-7 zeigen Beispiele für als Balken-Code vorliegende Steuerdaten, welche die Funktionen "Gerät permanent einschalten", "'Messung auslösen", "Parameter setzen" und "Reset-Anzeige" im Spektralfotometer SPM auslösen.

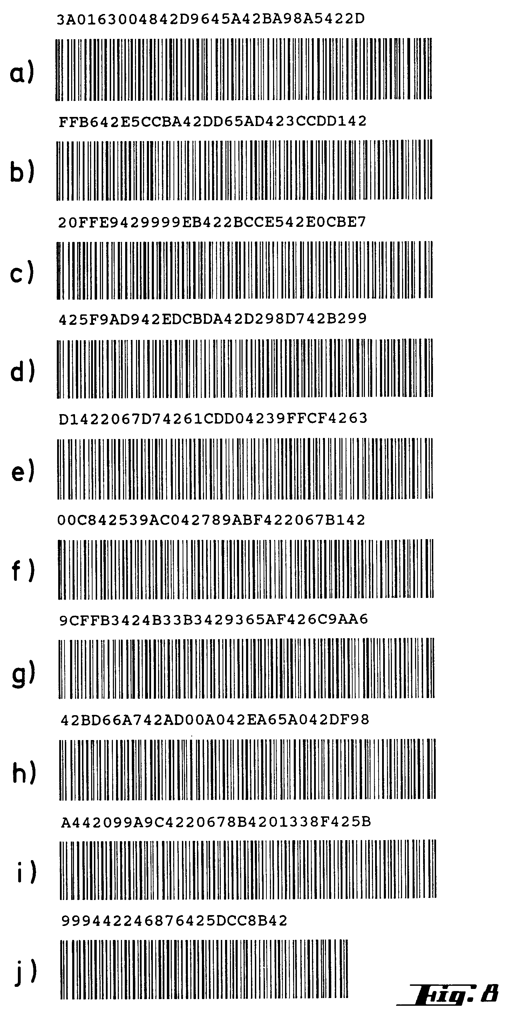

Die Figuren 8a-8j zeigen ein Beispiel für Steuerdaten, welche das Laden einer ganzen Tabelle von Lichtart-Daten in das Spektralfotometer SPM bewirken. Diese Steuerdaten liegen in Form von 10 einzelnen Balken-Code-Streifen vor, welche jeweils einen Teil der Steuerdaten sowie die ganannten Start- und Stop-Zeichen sowie die Gesamtanzahl der zusammengehörigen Streifen sowie ihre Positionsnummer enthalten.

Der Uebertragungsvorgang läuft wie folgt ab:
Mit dem Balken-Code-Leser BCR werden die einzelnen Code-Streifen in beliebiger Reihenfolge eingelesen und an den Rechner übertragen. Dieser erkennt anhand der mitübertragenen Codes für Anzahl der Teilmeldungen und Positionsnummern die einzelnen Teile der Steuerdaten. Er speichert sie ab und gibt Aufforderungsmeldungen zum Einlesen der fehlenden beziehungsweise fehlerhaften Teile ab und quittiert jede erfolgreiche und korrekte Einleseoperation akustisch. Wenn so alle Teile der Steuerdaten korrekt eingelesen sind, wird auch dies optisch und/oder akustisch zur Anzeige gebracht.

Ein weiterer wichtiger Aspekt der vorliegenden Erfindung besteht darin, dass der Rechner auch dazu programmiert sein kann, die in ihm gespeicherten Daten an ein an seine Schnittstelle angeschlossenes Speichergerät auszugeben und dort auf einem Speichermedium abzuspeichern. Besonders zweckmässig ist es, die interessierenden Daten mittels eines grafikfähigen Druckers in Form von Balken-Codes auszudrucken. Diese können dann später mittels des Balken-Code-Lesers wieder eingelesen werden, um so z.B. einmal gefundene frühere Konfigurationen auf einfache Weise wieder einstellen zu können. Die Konversion der Daten in Balken-Codes erfolgt z.B. gemäss den Richtlinien des schon genannten Manuals zum HBCR-8200 von Hewlett-Packard und analog den vorstehenden Ausführungen. Auf diese Weise ist es auch möglich, das gesamte Programm des Rechners bzw. seinen gesamten Speicherinhalt als Balken-Code oder dergleichen zu sichern.

## Patentansprüche

1. Fotometrisches Verfahren unter Verwendung eines computergesteuerten fotoelektrischen Messgeräts, insbesondere eines Spektralfotometers, welches einen fotoelektrischen Umwandler (1) zur Umsetzung von Messlicht in digitale Messdaten, einen digitalen Rechner (2) zur Steuerung des Messwandlers (1) und zur Verarbeitung der Messdaten in Messergebnisse, eine Bedienungstastatur (5) zur Steuerung von Messfunktionen und zur Eingabe von Daten in den Rechner, eine optische Anzeigevorrichtung (6) für Messergebnisse und Meldungen des Rechners und eine Schnittstelle (7) zum Anschluss eines externen Peripheriegeräts aufweist und welches sowohl mittels der Bedienungstastatur (5) als auch mittels über die Schnittstelle (7) zuführbarer Steuerdaten bedien- beziehungsweise steuerbar ist, dadurch gekennzeichnet, dass die Steuerdaten für das Messgerät (2) in maschinenlesbarer Formauf einem Datenträger (PS) aufgezeichnet und mittels eines an die Schnittstelle (7) angeschlossenen Lesegeräts (BCR) abgelesen und an den Rechner (2) übertragen werden.

2. Verfahren nach Anspruch 1, dadurch gekennzeichnet, dass die Steuerdaten in Form eines Balken-Codes (BC) aufgezeichnet und mittels eines Balken-Code-Lesers (BCR) abgelesen und an den Rechner (2) übertragen werden.

3. Verfahrennach Anspruch 1 oder 2, dadurch gekennzeichnet, dass als Steuerdaten Konfigurationen des Messgeräts, Messfunktionen beziehungsweise -modi, Messbedingungen, Referenzwerte, Kalibrationswerte, Programm-Daten oder dergleichen an den Rechner (2) übertragen werden.

4. Verfahren nach einem der Ansprüche 1-3, dadurch gekennzeichnet, dass die an den Rechner (2) übertragenen Steuerdaten auf Fehlerfreiheit und Vollständigkeit geprüft werden und entsprechende Meldungen angezeigt werden.

5. Verfahren nach einem der Ansprüche 1-4, dadurch gekennzeichnet, dass beim Betätigen der Bedienungstastatur (5) ein Zeitfenster geöffnet wird, während dessen Dauer der Rechner (2) in Empfangsbereitschaft für vom Lesegerät (BCR) übertragene Steuerdaten versetzt wird.

6. Verfahren nach Anspruch 5, dadurch gekennzeichnet, dass das Lesegerät (BCR) nur während des Zeitfensters aktiviert wird.

7. Verfahren nach einem der Ansprüche 1-6, dadurch gekennzeichnet, dass die Steuerdaten mit einem Fehlererkennungscode versehen werden.

8. Verfahren nach einem der Ansprüche 1-7, dadurch gekennzeichnet, dass durch einen längeren Datensatz gebildete Steuerdaten in Form von Teildatensätzen gespeichert werden, wobei jeder Teildatensatz eine Information über die Gesamtanzahl der zu einem vollständigen Datensatz gehörenden Teildatensätze sowie überseine Position innerhalb des Datensatzes enthält.

9. Verfahren nach einem der Ansprüche 1-8, dadurch gekennzeichnet, dass im Rechner (2) gespeicherte Steuerdaten und/oder Messdaten über die Schnittstelle an einen externen Datenträger ausgegeben und in maschinenlesbarer Form aufgezeichnet werden.

10. Verfahren nach Anspruch 9, dadurch gekennzeichnet, dass die im Rechner gespeicherten Steuerdaten und/oder Messdaten mittels eines grafikfähigen Druckers in Form eines Balken-Codes aufgezeichnet werden.

11. Computergesteuertes Fotometer, insbesondere Spektralfotometer, mit einem fotoelektrischen Messwandler (1) zur Umsetzung von Messlicht in digitale Messdaten, mit einem digitalen Rechner (2) zur Steuerung des Messwandlers (1) und zur Verarbeitung der Messdaten in Messergebnisse, welcher Rechne (2) mit einem Festwertspeicher (3) und einem Arbeitsspeicher (4) ausgestattet ist,
mit einer Bedienungstastatur (5) zur Steuerung der Messfunktionen und zur Eingabe von Daten in den Rechner (2),
mit einer optischen Anzeigevorrichtung (6) zur Anzeige der Messergebnisse und von Meldungen des Rechners, und
mit einer bidirektionalen Schnittstelle (7) zum Anschluss eines externen Peripheriegeräts, wobei der Rechner (2) digitale Daten von einem an die Schnittstelle (7) angeschlossenen Peripherigerät empfangen, im Arbeitsspeicher (4) ablegen und interpretieren sowie die den Daten entsprechende Aktion durchführen kann,
dadurch gekennzeichnet, dass der Rechner (2) dazu befähigt ist,
- bei Betätigung der Bedienungstastatur (5) ein Zeitfenster zu öffnen,
- innerhalb des Zeitfensters festzustellen, ob an die Schnittstelle (7) ein Codeleser (BCR) angeschlossen ist,
- bei angeschlossenem Codeleser (BCR) von diesem erzeugte Daten zu übernehmen,
- die übernommenen Daten auf Fehlerfreiheit und Vollständigkeit zu prüfen,
- bei Vorliegen fehlerhafter und/oder unvollständiger Daten eine entsprechende Meldung über die Anzeigevorrichtung (6) auszugeben,
- bei Vorliegen fehlerfreier und vollständiger Daten diese zu interpretieren und die ihnen entsprechende Aktion durchzuführen und
- das Zeitfenster wieder zu schliessen.

12. Fotometer nach Anspruch 11, dadurch gekennzeichnet, dass es mit einem Speisespannungsanschluss (PIF) für den Codeleser (BCR) versehen ist,und dass der Rechner (2) den Speisespannungsanschluss nur bei geöffnetem Zeitfenster mit Speisespannung beaufschlagt.

13. Fotometer nach Anspruch 11 oder 12, dadurch gekennzeichnet, dass es mit einer Schnittstelle (7) zum Anschluss eines Druckers ausgestattet ist und dass der Rechner (2) befähigt ist, in seinem Arbeitsspeicher enthaltene Konfigurationsdaten, Messfunktionsdaten, Messbedingungsdaten, Referenzwertdaten, Kalibrationswertdaten, Programmdaten, Messwertsdaten oder dergleichen an den Drucker auszugeben.

14. Fotometer nach Anspruch 13, dadurch gekennzeichnet, dass der Rechner (2) den Drucker veranlasst, die ausgegebenen Daten in durch das Lesegerät (BCR) lesbarer Form, insbesondere in Form eines Balken-Codes auszudrücken.
